# FASCICULE DE BREVET EUROPEEN

(11) **EP 3 394 653 B1**
(45) Date de publication et mention de la délivrance du brevet: **08.04.2020**
(21) Numéro de dépôt: 16809013.2
(22) Date de dépôt: 08.12.2016
(51) Int. Cl.: G02B 7/28, G02B 15/00, G06T 7/00, H04N 5/225, H04N 5/232, G06T 7/55

(54) **ZOOM PLENOPTIQUE A PORTEE OPTIMISEE**
PLENOPTISCHER ZOOM MIT OPTIMIERTEM BEREICH
PLENOPTIC ZOOM WITH OPTIMISED RANGE

(30) Priorité: 23.12.2015 FR 1502681
(43) Date de publication de la demande: 31.10.2018
(73) Titulaire: Thales, 92400 Courbevoie (FR)
(72) Inventeur: COSSU, Kevin, Sunnyvale CA 94086 (US)
(74) Mandataire: Bréda, Jean-Marc
(86) Numéro de dépôt international: PCT/EP2016/080178
(87) Numéro de publication internationale: WO 2017/108417

(56) Documents cités:
- US-A1- 2010 141 802
- US-A1- 2012 287 329

## Description

Le domaine de l'invention se situe dans le domaine de l'imagerie. Plus particulièrement, le domaine de l'invention est celui des imageurs utilisant un unique détecteur matriciel permettant d'estimer la distance des objets dans une scène observée.

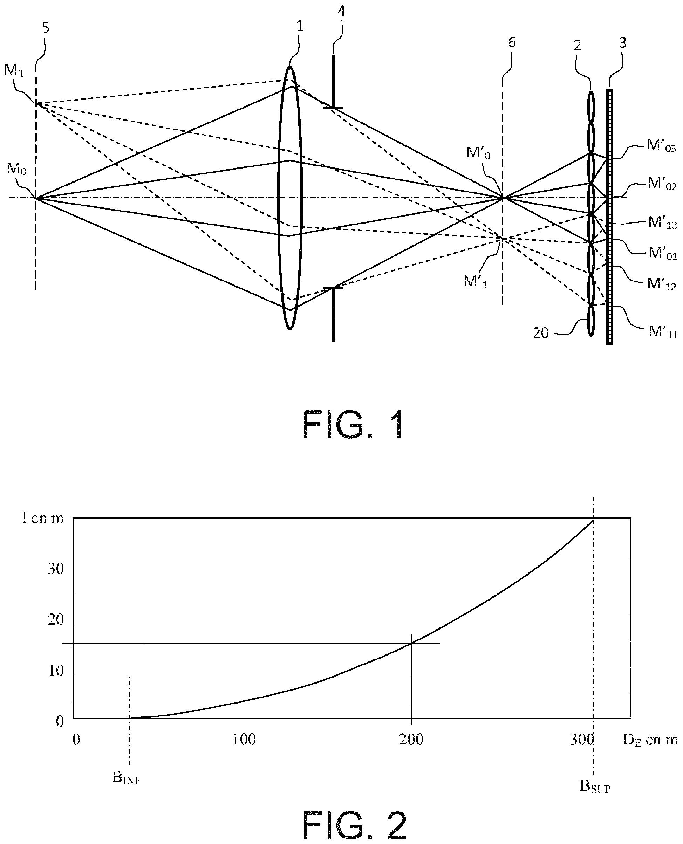

Les caméras dites plénoptiques assurent cette fonction. La figure 1 représente l'architecture d'une telle caméra. Sur les différentes figures, on a adopté les conventions suivantes, les optiques sont représentées en traits gras et les rayons lumineux en traits fins. Elle comporte essentiellement un objectif 1, une matrice 2 de microlentilles 20 et un détecteur matriciel 3. L'objectif 1 comporte une pupille de sortie 4. Son fonctionnement est le suivant. L'image d'un plan objet 5 se forme au moyen de l'objectif 1 dans un plan intermédiaire 6. Chaque point objet Mᵢ a donc une image Mᵢ' dans le plan intermédiaire. Ce plan intermédiaire est disposé devant la matrice 2 de microlentilles 20 de façon que l'image de ce plan donnée par les microlentilles 20 se fasse dans le plan du détecteur matriciel 3. Ainsi, en fonction de l'ouverture de l'objectif et de la position de l'image Mᵢ', un certain nombre de microlentilles 20 font de cette image Mᵢ' une mosaïque d'images Mᵢⱼ" dans le plan du détecteur. Par exemple, sur la figure 1, le point M₀ a comme image intermédiaire le point M'₀ qui donne comme images sur le détecteur les trois points M"₀₁, M"₀₂ et M"₀₃ et le point M₁ a comme image intermédiaire le point M'₁ qui donne comme images sur le détecteur le triplet de points M"₁₁, M"₁₂ et M"₁₃. La position des différentes images Mᵢⱼ" sur le détecteur permet de déterminer à la fois la position du point objet Mᵢ et sa distance à l'objectif.

Pour toutes informations complémentaires sur les caméras plénoptiques, on se reportera aux applications de références US 7 962 033 intitulé « Methods and Apparatus for Full-Resolution Light-Field Capture and Rendering » et US2013/0308035 intitulé « Image Pickup Apparatus ». On se reportera également aux publications intitulées « The Focused Plenoptic Camera », A. Lumdaine and T. Gerogiev et « Single Lens 3D-Camera with Extended Depth-of-Field"», C. Perwaß and L. Wietzke. Concernant les méthodes d'estimation de distance des objets dans une scène imagée par un ou plusieurs systèmes optiques, on peut citer la publication intitulée « Depth resolution in three-dimensional images », Jung-Young Son, Oleksii Chernyshov, Chun-Hae Lee, Min-Chul Park and Sumio Yano, . Opt. Soc. Am. A / Vol. 30, No. 5/ May 20.

Un système optique suivant la préambule de la revendication 1 est connu de US2010141802 A1.

Il est clair que l'on cherche à obtenir avec ce type de caméra la meilleure résolution possible à la fois dans un même plan objet et en profondeur. Cependant, une augmentation de résolution en profondeur avec les méthodes connues s'accompagne toujours d'une perte en résolution spatiale. De plus, la gamme de distance dans laquelle il est possible d'estimer la distance des objets observés est fixe et définie par les paramètres de l'objectif choisi. La figure 2 illustre ce problème. Elle représente l'incertitude I sur une distance estimée D_{E} en fonction de ladite distance estimée pour un objectif de focale donnée. Ainsi, à une distance estimée de 200 mètres correspond une incertitude de mesure d'environ 15 mètres, ce qui peut être élevé. Cette incertitude est liée à la précision de la méthode de traitement des images, c'est-à-dire la capacité à estimer des décalages sub-pixelliques entre différentes images d'un même point. La courbe de la figure 2 est réalisée avec une capacité d'estimation de ces décalages au dixième de pixel près, ce qui correspond à une valeur assez commune. Les bornes B_{INF} et B_{SUP} de la courbe représentent la profondeur de champ de la caméra pour cette focale de l'objectif. Dans le cas présent, la profondeur de champ est comprise entre 30 mètres et 300 mètres. Il est possible de choisir des bornes plus larges, par exemple en changeant le critère de netteté pour le calcul de la profondeur de champ, ou de les changer en appliquant une défocalisation pour une valeur de focale de l'objectif donnée mais l'incertitude reste élevée pour certaines plages de distance.

Pour pallier cet inconvénient, différentes voies ont été explorées. Ainsi, le brevet EP 2 244 484 intitulé "Digital imaging method for synthetizing an image using data recorded with a plenoptic camera" met en oeuvre des microlentilles de focale variable. On retrouve cette approche dabs la publication de la société Raytrix intitulée « Single Lens 3D-Camera with Extended Depth-of-Field, C. Perwaß and L. Wietzke ». Plus récemment, la publication intitulée « An electrically tunable plenoptic camera using a liquid crystal microlens array », Review of Scientific Instruments 86, 053101 (2015) présente une camera plénoptique intégrant une matrice de microlentilles à focale contrôlable électriquement. L'inconvénient de ces différentes approches est qu'elles nécessitent des matrices de microlentilles sophistiquées.

Le système optique selon l'invention ne présente pas ces inconvénients et fonctionne avec une matrice de microlentilles simples et identiques. Il repose sur l'analyse suivante.

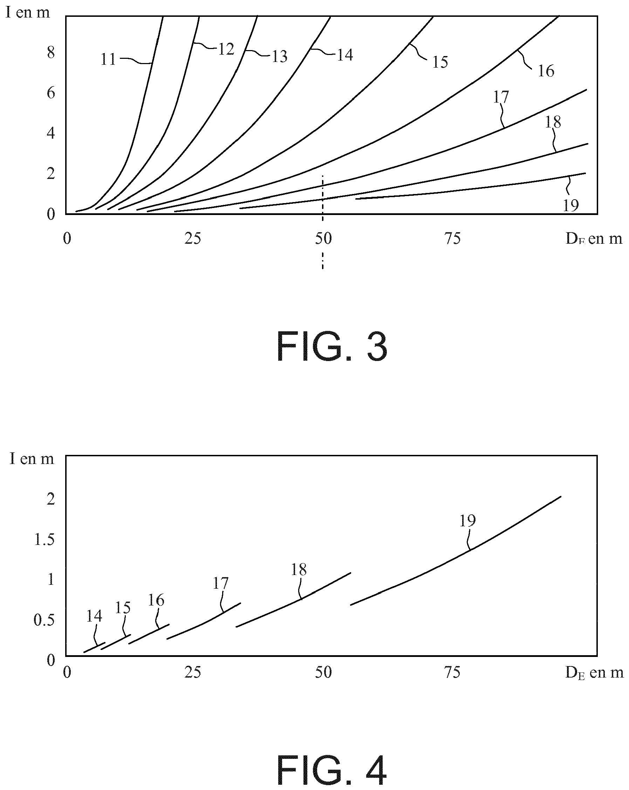

Si l'on change de focale, la courbe précédente varie. Ainsi, la figure 3 représente l'incertitude I sur une distance estimée D_{E} en fonction de ladite distance estimée pour des objectifs de différentes focales qui sont notés de 11 à 19. Pour donner un ordre de grandeur, les focales sont comprises entre 30 et 200 millimètres. Pour un objet situé à distance donnée, il existe alors une focale optimale qui donne une incertitude de mesure minimale. Par exemple, pour 50 mètres, l'objectif optimal est l'objectif 18 et l'incertitude de mesure avec cet objectif ne dépasse pas 1 mètre. Ainsi, on peut déterminer pour chaque objectif la plage de distance pour laquelle l'incertitude de mesure est minimale. Avec les objectifs précédents, on obtient les plages indiquées sur la figure 4. Pour des raisons de clarté, les plus courtes focales des objectifs 11, 12 et 13 ne sont pas représentées sur cette figure, les plages étant très rapprochées. En utilisant non plus une optique mais une série d'optiques de focale différente, on peut réduire de façon significative l'incertitude de mesure. Bien entendu, on ne peut pas changer en permanence d'objectif. La solution proposée est donc d'utiliser comme objectif un zoom, c'est-à-dire un objectif de focale variable, fonctionnant de façon continue ou discrète afin de permettre une estimation la plus précise possible de la distance des objets dans la scène en jouant sur la distance focale.

Plus précisément, l'invention a pour objet un système optique comportant un objectif de type zoom et un bloc de détection optique à estimation de profondeur, ledit bloc de détection optique à estimation de profondeur comportant une matrice de microlentilles et un détecteur matriciel, la matrice de microlentilles étant agencée de façon que l'image du plan de focalisation du zoom soit focalisée par la matrice de microlentilles dans le plan du détecteur matriciel,
caractérisé en ce que ledit système optique comporte des moyens de calcul, pour une première focale du zoom et pour un objet déterminé, de la distance estimée de cet objet et de l'incertitude de mesure sur cette estimation, fonction de ladite première focale et de ladite distance estimée et, cette distance estimée étant connue, des moyens d'optimisation permettant de déterminer au moins une seconde focale du zoom à laquelle correspond une incertitude de mesure inférieure sur cette estimation.

Avantageusement, les moyens d'optimisation comportent une boucle d'itérations permettant de déterminer une focale optimale à laquelle correspond l'incertitude de mesure minimale sur ladite estimation, chaque itération comportant au moins un changement de focale, le calcul de la distance estimée correspondant à la nouvelle focale et l'incertitude de mesure sur cette estimation.

Avantageusement, la boucle d'itérations est effectuée dans un plan de focalisation du zoom constant ou dans un plan de focalisation du zoom variable.

Avantageusement, la boucle d'itérations est effectuée à ouverture du zoom constante ou variable.

Avantageusement, le zoom est un zoom à focale continument variable ou le zoom est un objectif multifocale.

Avantageusement, le bloc de détection optique à estimation de profondeur est un bloc de détection infrarouge.

L'invention sera mieux comprise et d'autres avantages apparaîtront à la lecture de la description qui va suivre donnée à titre non limitatif et grâce aux figures annexées parmi lesquelles :
La figure 1 représente une caméra plénoptique à focale fixe selon l'art antérieur ;
La figure 2 représente l'incertitude de mesure sur une distance estimée en fonction de la distance pour une caméra plénoptique de focale fixe connue ;
La figure 3 représente l'incertitude de mesure sur une distance estimée en fonction de la distance pour une caméra plénoptique comportant des objectifs de focale croissante ;
La figure 4 représente, pour chaque objectif précédent, la plage d'incertitude de mesure minimale en fonction de la distance ;
Les figures 5 et 6 représentent un zoom plénoptique selon l'invention dans deux configurations extrêmes de focale ;
La figure 7 représente une vue agrandie de la partie réceptrice du zoom plénoptique précédent.
La figure 8 représente, pour un zoom plénoptique de focale continûment variable, l'incertitude de mesure minimale en fonction de la distance estimée.

L'objet de l'invention est un système optique comportant un objectif de type zoom et un bloc de détection optique à estimation de profondeur, ledit bloc de détection optique à estimation de profondeur comportant une matrice de microlentilles et un détecteur matriciel, la matrice de microlentilles étant agencée de façon que l'image du plan de focalisation du zoom soit focalisé par la matrice de microlentilles dans le plan du détecteur matriciel.

Pour assurer un fonctionnement correct de l'estimation de profondeur, il est nécessaire de connaître la distorsion et la courbure de champ du zoom pour différentes valeurs de focale de ce zoom.

Il existe deux catégories de zoom. Ce sont d'une part les zooms à focale continument variable et d'autre part les zooms connus sous le nom d'objectifs multifocales. L'invention s'applique pour ces deux catégories.

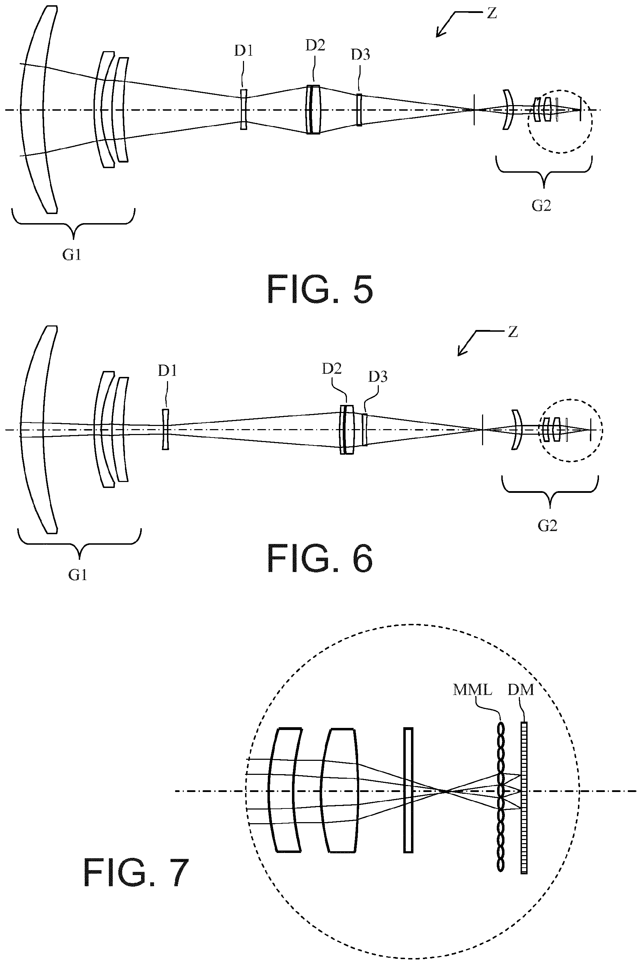

A titre d'exemple, les figures 5 et 6 représentent un zoom plénoptique Z selon l'invention dans deux configurations extrêmes de focale. La figure 7 représente une vue agrandie de la partie réceptrice du zoom plénoptique précédent.

Ce zoom Z comporte deux groupes de lentilles fixes notées G1 et G2 et trois groupes de lentilles D1, D2 et D3 mobiles. Le déplacement de ces trois groupes de lentilles selon un mouvement déterminé permet de modifier à la fois la focale du zoom et de conserver la mise au point dans son plan focal. Ainsi, la figure 5 représente le zoom dans une configuration à longue focale et la figure 6 le zoom dans une configuration à courte focale. Le rapport de focale est d'environ 7 dans le cas de ce zoom. D'autres configurations de zoom sont possibles.

Le zoom selon l'invention étant plénoptique, il comporte , là où se trouve dans un zoom classique le détecteur, un bloc de détection optique à estimation de profondeur, ledit bloc de détection optique à estimation de profondeur comportant une matrice de microlentilles MML et un détecteur matriciel DM comme on le voit sur la figure 7 qui représente une vue agrandie de la partie cerclée des figures 5 et 6 précédentes.

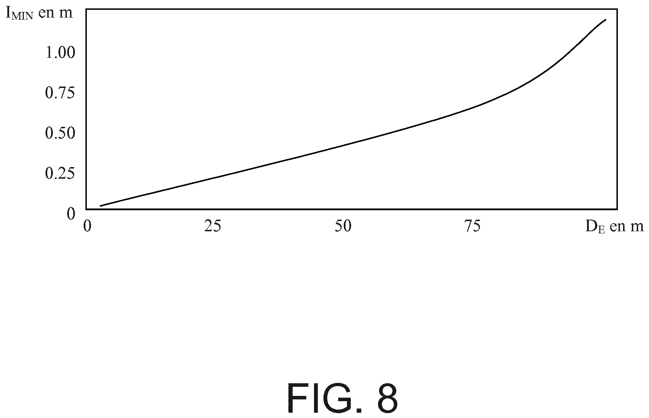

Comme il a été dit précédemment, il existe, pour chaque distance estimée, une focale du zoom donnant une incertitude de mesure minimale I_{MIN}. Cette incertitude de mesure minimale en fonction de la distance estimée D_{E} est représentée sur la figure 8. Cette incertitude dépend des bornes de profondeur de champ du système optique. Sur cette courbe, l'incertitude de mesure n'excède pas 1 mètre à 100 mètres de distance. La focale du zoom change le long de cette courbe. Dans le cas de la figure 8, la focale varie d'un facteur 8 entre le bas de la courbe et le haut de la courbe. Le zoom a nécessairement une focale maximale. Par conséquent, cette courbe a un aspect linéaire tant qu'il est possible d'augmenter la focale de l'objectif. Lorsque la focale atteint sa valeur maximale, la variation devient plus importante.

Lorsque l'utilisateur fait une mesure, il ne connait pas, par principe, la distance à estimer et par conséquent, il ne peut savoir, a priori, la focale du zoom donnant la plus petite incertitude de mesure sur cette distance. A cette fin, le système optique comporte :
- des moyens de calcul, pour une première focale du zoom et pour un objet déterminé, de la distance estimée de cet objet et de l'incertitude de mesure sur cette estimation, fonction de ladite première focale et de ladite distance estimée et,
- cette distance estimée étant connue, des moyens d'optimisation permettant de déterminer au moins une seconde focale du zoom à laquelle correspond une incertitude de mesure inférieure sur cette estimation.

Les moyens de calcul de distance estimée et d'incertitude de mesure sur cette distance sont effectués selon les méthodes classiques utilisées dans les caméras plénoptiques, la focale du zoom et son ouverture étant connues.

La première focale choisie peut être, à titre d'exemple, la plus petite focale du zoom ou sa plus grande focale ou une focale intermédiaire. Il est possible que, ce choix de focale étant arbitraire, l'objet dont on cherche à mesurer la distance ne soit pas dans l'intervalle de profondeur de champ de la focale retenue, dans ce cas, on recommence la mesure avec une focale plus petite ou plus grande selon le cas d'espèce jusqu'à obtenir une première évaluation de distance afin d'initier le processus d'optimisation d'estimation de distance.

Il existe différentes techniques permettant d'effectuer l'optimisation de la mesure. A titre d'exemple, les moyens d'optimisation comportent une boucle d'itérations permettant de déterminer une focale optimale à laquelle correspond l'incertitude de mesure minimale sur ladite estimation, chaque itération comportant au moins un changement de focale, le calcul de la distance estimée correspondant à la nouvelle focale et l'incertitude de mesure sur cette estimation. On peut ainsi converger rapidement vers la focale optimale. Ce processus peut être automatisé, les moyens d'optimisation ajustant automatiquement la focale du zoom pour obtenir la précision souhaitée.

Cette boucle d'itérations peut être effectuée dans un plan de focalisation du zoom constant. On peut également, de façon à changer les bornes des distances accessibles au zoom, pratiquer une défocalisation connue et recommencer le processus d'itérations avec les nouvelles bornes ainsi définies.

On peut également travailler à ouverture du zoom constant de façon à faciliter le calcul de distance dans la boucle d'itérations. Dans ce cas, pour un point situé dans le champ objet, le nombre de microlentilles assurant la mesure reste constant. On peut également travailler à ouverture du zoom variable de façon à améliorer l'incertitude de mesure. Dans ce cas, pour un point situé dans le champ objet, le nombre de microlentilles assurant la mesure augmente avec l'ouverture.

## Revendications

1. Système optique comportant un objectif de type zoom (Z) et un bloc de détection optique à estimation de profondeur, ledit bloc de détection optique à estimation de profondeur comportant une matrice de microlentilles (MML) et un détecteur matriciel (DM), la matrice de microlentilles étant agencée de façon que l'image du plan de focalisation du zoom soit focalisée par la matrice de microlentilles dans le plan du détecteur matriciel,
**caractérisé en ce que** ledit système optique comporte des moyens de calcul, pour une première focale du zoom et pour un objet déterminé, de la distance estimée (D_{E}) de cet objet et de l'incertitude de mesure (I) sur cette estimation, fonction de ladite première focale et de ladite distance estimée et, cette distance estimée étant connue, des moyens d'optimisation permettant de déterminer au moins une seconde focale du zoom à laquelle correspond une incertitude de mesure inférieure sur cette estimation.

2. Système optique selon la revendication 1, **caractérisé en ce que** les moyens d'optimisation comportent une boucle d'itérations permettant de déterminer une focale optimale à laquelle correspond l'incertitude de mesure minimale sur ladite estimation, chaque itération comportant au moins un changement de focale, le calcul de la distance estimée correspondant à la nouvelle focale et l'incertitude de mesure sur cette estimation.

3. Système optique selon la revendication 2, **caractérisé en ce que** la boucle d'itérations est effectuée dans un plan de focalisation du zoom constant.

4. Système optique selon la revendication 2, **caractérisé en ce que** la boucle d'itérations est effectuée dans un plan de focalisation du zoom variable.

5. Système optique selon la revendication 2, **caractérisé en ce que** la boucle d'itérations est effectuée à ouverture du zoom constante.

6. Système optique selon la revendication 2, **caractérisé en ce que** la boucle d'itérations est effectuée à ouverture du zoom variable.

7. Système optique selon l'une des revendications précédentes, **caractérisé en ce que** le zoom est un zoom à focale continument variable.

8. Système optique selon l'une des revendications 1 à 6, **caractérisé en ce que** le zoom est un objectif multifocale.

9. Système optique selon l'une des revendications précédentes, **caractérisé en ce que** le bloc de détection optique à estimation de profondeur est un bloc de détection infrarouge.

## Patentansprüche

1. Optisches System, beinhaltend ein Objektiv vom Typ Zoom (Z) und einen optischen Detektionsblock mit Tiefenschätzung, wobei der optische Detektionsblock mit Tiefenschätzung eine Mikrolinsen-Matrix (MML) und einen Matrixdetektor (DM) beinhaltet, wobei die Mikrolinsen-Matrix so angeordnet ist, dass das Bild der Fokussierungsebene des Zooms durch die Mikrolinsen-Matrix in der Ebene des Matrixdetektors fokussiert wird,
**dadurch gekennzeichnet, dass** das optische System Berechnungsmittel beinhaltet, für eine erste Brennweite des Zooms und für ein bestimmtes Objekt, des geschätzten Abstandes (DE) dieses Objekts und der Messungewissheit (I) dieser Schätzung, welche eine Funktion der ersten Brennweite und des geschätzten Abstandes ist, und, da der geschätzte Abstand bekannt ist, Optimierungsmittel, welche es ermöglichen, mindestens eine zweite Brennweite des Zooms zu bestimmen, welcher eine geringere Messungewissheit für diese Schätzung entspricht.

2. Optisches System nach Anspruch 1, **dadurch gekennzeichnet, dass** die Optimierungsmittel eine Iterationsschleife beinhalten, welche es ermöglicht, eine optimale Brennweite zu bestimmen, welcher die minimale Messungewissheit für die Schätzung entspricht, wobei jede Iteration mindestens eine Brennweitenänderung beinhaltet, wobei die Berechnung des geschätzten Abstandes der neuen Brennweite und der Messungewissheit für diese Schätzung entspricht.

3. Optisches System nach Anspruch 2, **dadurch gekennzeichnet, dass** die Iterationsschleife in einer konstanten Fokussierungsebene des Zooms ausgeführt wird.

4. Optisches System nach Anspruch 2, **dadurch gekennzeichnet, dass** die Iterationsschleife in einer variablen Fokussierungsebene des Zooms ausgeführt wird.

5. Optisches System nach Anspruch 2, **dadurch gekennzeichnet, dass** die Iterationsschleife bei konstantem Blendenwert des Zooms ausgeführt wird.

6. Optisches System nach Anspruch 2, **dadurch gekennzeichnet, dass** die Iterationsschleife bei variablem Blendenwert des Zooms ausgeführt wird.

7. Optisches System nach einem der vorhergehenden Ansprüche, **dadurch gekennzeichnet, dass** der Zoom ein Zoom mit kontinuierlich variabler Brennweite ist.

8. Optisches Systemnach einem der Ansprüche 1 bis 6, **dadurch gekennzeichnet, dass** der Zoom ein multifokales Objektiv ist.

9. Optisches System nach einem der vorhergehenden Ansprüche, **dadurch gekennzeichnet, dass** der optische Detektionsblock mit Tiefenschätzung ein Infrarot-Detektionsblock ist.

## Claims

1. An optical system comprising a zoom type objective lens (Z) and a depth-estimation optical detection unit, said depth-estimation optical detection unit comprising a matrix of micro-lenses (MML) and a matrix detector (DM), the matrix of micro-lenses being arranged so that the image of the focal plane of the zoom is focused by the matrix of micro-lenses in the plane of the matrix detector,
**characterised in that** said optical system comprises computing means, for a first focal length of the zoom and for a determined object, for computing the estimated distance (D_{E}) of this object and the measurement uncertainty (I) for this estimate, as a function of said first focal length and of said estimated distance and, with this estimated distance being known, optimising means allowing the determination of at least one second focal length of the zoom, with which a lower measurement uncertainty for this estimate corresponds.

2. The optical system according to claim 1, **characterised in that** the optimising means comprise a loop of iterations allowing an optimal focal length to be determined, with which the minimum measurement uncertainty for said estimate corresponds, each iteration comprising at least one change of focal length, the computation of the estimated distance corresponding to the new focal length and the measurement uncertainty for this estimate.

3. The optical system according to claim 2, **characterised in that** the loop of iterations is performed in a constant zoom focal plane.

4. The optical system according to claim 2, **characterised in that** the loop of iterations is performed in a variable zoom focal plane.

5. The optical system according to claim 2, **characterised in that** the loop of iterations is performed at constant zoom aperture.

6. The optical system according to claim 2, **characterised in that** the loop of iterations is performed at variable zoom aperture.

7. The optical system according to any one of the preceding claims, **characterised in that** the zoom is a continuously variable focal length zoom.

8. The optical system according to any one of claims 1 to 6, **characterised in that** the zoom is a multi-focal objective lens.

9. The optical system according to any one of the preceding claims, **characterised in that** the depth-estimation optical detection unit is an infrared detection unit.
